# EUROPEAN PATENT APPLICATION

(11) **EP 2 172 255 A1**
(43) Date of publication of application: **07.04.2010**
(21) Application number: 08790133.6
(22) Date of filing: 02.07.2008
(51) Int. Cl.: B01D 53/26, B01D 53/22, B01D 63/02, B01D 69/08, G21F 9/02

(54) **HOLLOW FIBER MEMBRANE DEHUMIDIFIER**

(30) Priority: 02.07.2007 JP 2007173874
(71) Applicant: Kabushiki Kaisha Toshiba, Minato-ku, Tokyo 105-8001 (JP)
(72) Inventor: SEKIGUCHI, Koichi, Tokyo 105-8001 (JP)
(74) Representative: Stenbäck, Maria Elisabeth
(86) International application number: PCT/JP2008/001734
(87) International publication number: WO 2009/004799

(57) **Abstract**

Assembling performance, handling performance, sealing performance and dehumidification performance of hollow fiber membrane modules are enhanced while achieving downsizing of a hollow fiber membrane dehumidifier. The hollow fiber membrane dehumidifier includes: a dehumidification container (67) composed of a lower trunk (38) provided with an exhaust gas inlet section (63), an upper trunk (37) provided with an exhaust gas outlet (58), and a body trunk (33); a lower tube plate (35) for constructing an exhaust gas inlet chamber (39) in the body trunk (33); an upper tube plate (34) for constructing an exhaust gas outlet chamber (42) in the body trunk (33); a partition plate (36) for partitioning the interior of the body trunk (33) to an exhaust gas processing chamber (40) and a purge gas chamber (41); a plurality of hollow fiber membrane modules (44) inserted into each through hole of an upper tube plate (34), the partition plate (36) and the lower tube plate (35); and a sealing material held in sealing groove formed in the hollow fiber membrane module (44) for sealing among an upper head (54), a lower head (50), the upper tube plate (34), the partition plate (36) and the lower tube plate (35).

## Description

### TECHNICAL FIELD

The present invention relates to a hollow fiber membrane dehumidifier for removing moisture contained in radioactive gaseous wastes (to be referred to as exhaust gas hereinafter) produced from nuclear power plants.

### BACKGROUND ART

Hollow fiber membrane dehumidifiers containing dehumidifying hollow fiber membranes are known as apparatus for selectively removing moisture from humid air to obtain dry air (refer to, e.g., Patent Document 1).

Generally, a dehumidifying hollow fiber membrane is formed by processing fibers to make them hollow fibers having an outer diameter of about 0.3 mm and showing a high steam permeation performance. A hollow fiber membrane module is formed by bundling a large number of such hollow fibers and rigidly securing them at the ends thereof by means of resin or an adhesive agent.

A hollow fiber membrane dehumidifier is formed by arranging a large number of such hollow fiber membrane modules in it. A dehumidifying process is conducted as gas to be processed is forced to pass through the inner surfaces of the hollow fiber membranes so as to make steam permeate to the outside of the membranes from the inner walls of the hollow fiber membranes by way of sequential processes of dissolution, diffusion and dispersion and become removed due to the pressure difference between the inside and the outside of each of the hollow fiber membranes and the difference of mol fraction between the inside and the outside of each of the hollow fiber membranes produced by flowing purging dry gas to the outside of the membranes.

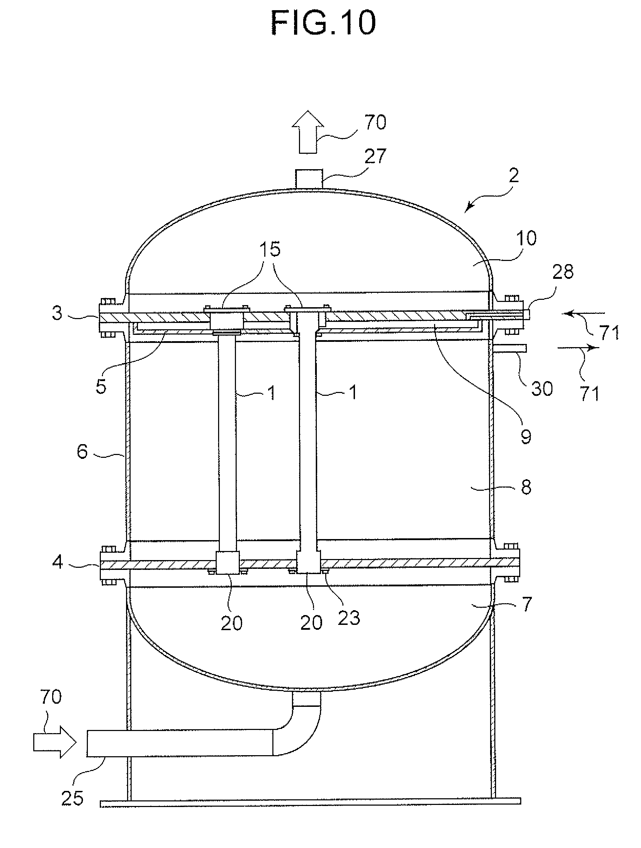

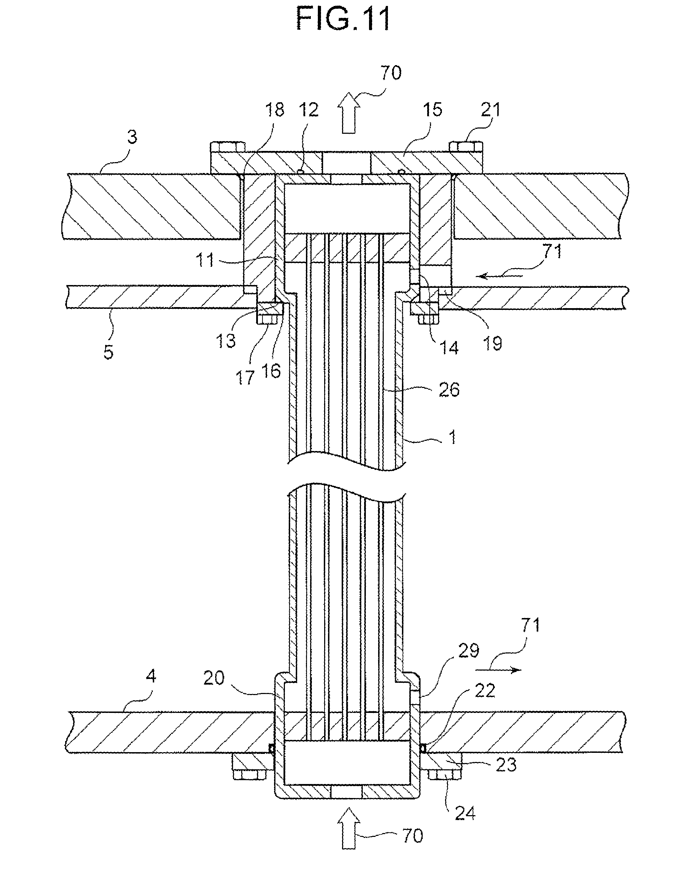

The structure of a known hollow fiber membrane dehumidifier will be described below with reference to FIGS. 10 and 11.

FIG. 10 is a schematic longitudinal cross-sectional view of the known hollow fiber membrane dehumidifier and FIG. 11 is an enlarged schematic partial view of the hollow fiber membrane dehumidifier of FIG. 10, showing the installation structure of a hollow fiber membrane module thereof.

As shown in FIG. 10, a body trunk 6 is axially divided into an exhaust gas inlet chamber 7, an exhaust gas processing chamber 8, a purge gas chamber 9 and an exhaust gas outlet chamber 10 by an upper tube plate 3, a lower tube plate 4 and a partition plate 5. A plurality of hollow fiber membrane modules 1 are arranged in the exhaust gas processing chamber 8.

As shown in FIG. 11, a first seal member 12 and a second seal member 13 that are typically O-rings are fitted to upper head 11 of the hollow fiber membrane module 1. A cap 15 is put on the upper head 11 so as to align a purge gas inlet 14 of the upper head 11 and the hole of the cap 15. The first seal member 12 and the second seal member 13 are rigidly held in position by pressing the ring 16 by means of bolts 17. A third seal member 18 and a fourth seal member 19 are fitted to the cap 15, and the hollow fiber membrane module 1 is inserted into the through hole of the upper tube plate 3 and that of the partition plate 5, paying attention so as not to let the third seal member 18 and the fourth seal member 19 come off.

Since the hollow fiber membrane module 1 is also inserted into the through hole of the lower tube plate 4, it is necessary to make sure that the lower head 20 of each of the hollow fiber membrane modules 1 is inserted into the lower tube 4 from below. After the hollow fiber membrane module 1 is inserted, the cap 15 is provisionally fitted by means of bolts 21. A fifth seal member 22 that is also typically an O-ring is inserted into the lower tube plate 4 from below and the through hole of the lower tube plate 4, the hollow fiber membrane module 1 and the fifth seal member 22 are adjusted for their positions so as to make them concentrically aligned. Then, the hollow fiber membrane module 1 is rigidly secured relative to the upper tube plate 3, the partition plate 5 and the lower tube plate 4, as the cap 15 is rigidly held in position by means of the bolts 21 and ring 23 is rigidly secured to the lower tube plate 4 by means of bolts 24.

Exhaust gas flows in the known hollow fiber membrane dehumidifier 2 along an arrow 70 in FIGS. 10 and 11. More specifically, the exhaust gas (wet gas) that enters the dehumidifier 2 from an exhaust gas inlet section 25 then goes into the exhaust gas inlet chamber 7 and passes through the insides of hollow fibers 26 in the hollow fiber membrane modules 1 to get to the exhaust gas outlet chamber 10. The exhaust gas that is dehumidified as it passes through the insides of the hollow fibers 26 in the hollow fiber membrane modules 1 is then discharged from an exhaust gas outlet section 27.

Purge gas is introduced into the purge gas inlet 14 from a purge gas inlet section 28 through the purge gas chamber 9 as indicated by an arrow 71. The introduced purge gas takes out moisture from the exhaust gas that passes through the films of the hollow fibers 26 and conveys the moisture as it passes the outside of the hollow fibers 26 of the hollow fiber membrane modules 1 before it is discharged into the exhaust gas processing chamber 8 by way of purge gas outlets 29 and then to the outside of the hollow fiber membrane dehumidifier 2 from a purge gas flow out section 30.

The exhaust gas containing moisture and the dry purge gas need to be separated from each other in order to prevent them from mixing and enhance the dehumidification performance. The fifth seal member 22 that is an O-ring is arranged for each hollow fiber membrane module 1 between the exhaust gas inlet chamber 7 and the exhaust gas processing chamber 8 in order to separate the exhaust gas that contains moisture and the dry purge gas. The second seal member 13 and the fourth seal member 19 are arranged between the exhaust gas processing chamber 8 and the purge gas chamber 9. Additionally, the first seal member 12 and the third seal member 18 are arranged between the purge gas chamber 9 and the exhaust gas outlet chamber 10. The exhaust gas (wet air) and the purge gas (dry air) are separated from each other by arranging the fifth seal member 22, the second seal member 13, the fourth seal member 19, the first seal member 12 and the third seal member 18.
Patent Document 1: Japanese Paten Application Laid-Open Publication No. 2003-159509

### DISCLOSURE OF THE INVENTION

### PROBLEM TO BE SOLVED BY THE INVENTION

The known hollow fiber membrane dehumidifier 2 has five seal sections formed by using seal members that are typically O-rings in each hollow fiber membrane module 1, including the fifth seal member 22, the second seal member 13, the fourth seal member 19, the first seal member 12 and the third seal member 18.

Therefore, there is a problem that it is difficult to put a hollow fiber membrane module 1 into the trunk body 6 and place it in position without allowing the third seal member 18 and the fourth seal member 19 to fall down because they are not rigidly secured to the hollow fiber membrane module 1. The seal members can fall down in the body trunk 6 when pulling out the hollow fiber membrane module 1 for replacement.

Additionally, the position of the hollow fiber membrane module 1 and the condition in which each of the seal members is fitted need to be adjusted delicately in order to reliably prevent exhaust gas from leaking through the five seal members that are typically O-rings. In other words, the hollow fiber membrane dehumidifier has many problems from the viewpoint of assembly and sealing. Additionally, a cap 15 is fitted to rigidly secure a hollow fiber membrane module 1 to the upper tube plate 3 and the partition plate 5. Thus, there is a problem that each of the hollow fiber membrane modules 1 occupies a large area to make the body trunk 6 large because of the outer diameter of the cap 15.

Additionally, each hollow fiber membrane module 1 has a longitudinally oblong profile that gives rise to a problem that it is difficult to concentrically arrange the third seal member 18, the fourth seal member 19 and the fifth seal member 22 fitted to the upper head 11 and the lower head 20 by means of the conventional holding technique.

Furthermore, a plurality of hollow fiber membrane modules 1 are arranged in the body trunk 6. Since the exhaust gas inlet chamber 7, the exhaust gas processing chamber 8, the purge gas chamber 9 and the exhaust gas outlet chamber 10 are chambers that are separately arranged, there arises a problem that the exhaust gas or the purge gas that flows through the hollow fiber membrane modules 1 can produce uneven flows depending on the flow rate of exhaust gas.

Finally, in the known hollow fiber membrane dehumidifier 2, the direction of the purge gas inlet 14 and that of the purge gas outlet 29 of each hollow fiber membrane module 1 are determined arbitrarily relative to the direction of the purge gas inlet section 28 and the purge gas flow out section 30 to give rise to a problem that the exhaust gas and the purge gas that flow in the inside of each hollow fiber membrane module 1 can become uneven to degrade the dehumidification performance.

In view of the above-identified problems, it is therefore an object of the present invention to provide a hollow fiber membrane dehumidifier that can downsize the body trunk and improve the hollow fiber membrane modules from the viewpoint of assembly, handling, sealing and dehumidification performance.

### MEANS FOR SOLVING THE PROBLEM

In order to achieve the object described above, according to the present invention, there is provided a hollow fiber membrane dehumidifier characterized by comprising: a dehumidification container including a first trunk provided with exhaust gas outlet sections and a second trunk provided with exhaust gas inlet sections; a first tube plate for forming an exhaust gas outlet chamber at a side of the first trunk; a partition plate arranged in the dehumidification container to partition inside of the dehumidification container into an exhaust gas processing chamber including purge gas flow out sections and a purge gas chamber including purge gas inlet sections; a plurality of hollow fiber membrane modules respectively put into through holes formed in the first tube plate and through holes formed in the partition plate; seal members held in respective seal grooves arranged in first heads of the hollow fiber membrane modules at the side of the first trunk to seal gaps between the first heads and the first tube plate and gaps between the first heads and the partition plate; and a keep plate for pressing the hollow fiber membrane modules against the first tube plate from a side of end of the first trunk.

### ADVANTAGES OF THE INVENTION

Thus, a hollow fiber membrane dehumidifier according to the present invention provides a remarkable improvement for the hollow fiber membrane modules thereof from the viewpoint of assembly and handling and can significantly reduce the time required for assembly and also the time required for disassembly due to the seal members that are held in the sealing grooves formed on the upper heads and the lower heads of the hollow fiber membrane modules for sealing between the upper head and the upper tube plate, between the lower head and the upper tube plate and between the partition plate and the lower tube plate.

### BRIEF DESCRIPTION OF THE DRAWINGS

FIG. 1 is a schematic longitudinal cross-sectional view of an embodiment of hollow fiber membrane dehumidifier according to the present invention, showing the structure thereof.
FIG. 2 is an enlarged schematic partial view of the hollow fiber membrane dehumidifier of FIG. 1, showing the installation structure of a hollow fiber membrane module thereof.
FIGS. 3(a) and 3(b) schematically illustrate the hollow fiber membrane dehumidifier of FIG. 1. FIG. 3(a) is a schematic perspective view of the embodiment, and FIG. 3(b) is a schematic cross-sectional view thereof taken along line B-B in FIG. 3(a) as viewed in the direction of the arrows.
FIG. 4 is a characteristic graph illustrating the dehumidification performance of the hollow fiber membrane dehumidifier of FIG. 1.
FIGS. 5(a) through 5(c) schematically illustrate the seal section of the lower head of a hollow fiber membrane module according to the present invention. FIG. 5(a) is a cross-sectional view of the first exemplar seal section, FIG. 5(b) is a cross-seetional view of the second exemplar seal section, and FIG. 5(c) is a cross-sectional view of the third exemplar seal section.
FIG. 6 is a schematic longitudinal cross-sectional view of another embodiment of hollow fiber membrane dehumidifier according to the present invention that is made to lie on the lateral peripheral surface thereof, showing the structure thereof.
FIGS. 7(a) and 7(b) schematically illustrate still another embodiment of hollow fiber membrane dehumidifier according to the present invention, showing the partitioning structure thereof. FIG. 7(a) is a schematic perspective view of the embodiment, and FIG. 7(b) is a schematic plan view thereof.
FIG. 8 is a schematic longitudinal cross-sectional view of still another embodiment of hollow fiber membrane dehumidifier according to the present invention and having a structure realized by vertically arranging upper hollow fiber membrane modules on respective lower hollow fiber membrane modules, showing the structure thereof.
FIG. 9 is a schematic longitudinal cross-sectional view of still another embodiment of hollow fiber membrane dehumidifier according to the present invention, showing the structure thereof.
FIG. 10 is a schematic longitudinal cross-sectional view of a known hollow fiber membrane dehumidifier, showing the structure thereof.
FIG. 11 is an enlarged schematic partial view of the hollow fiber membrane dehumidifier of FIG. 10, showing the installation structure of a hollow fiber membrane module thereof.

### EXPLANATION OF REFERENCE SYMBOLS

1: hollow fiber membrane module; 2: hollow fiber membrane dehumidifier 3: upper tube plate; 4: lower tube plate; 5: partition plate; 6: body trunk 7: exhaust gas inlet chamber; 8: exhaust gas processing chamber; 9: purge gas chamber; 10: exhaust gas outlet chamber; 11: upper head; 12: first seal member; 13: second seal member; 14: purge gas inlet; 15: cap; 16: ring; 17: bolt; 18: third seal member; 19: fourth seal member; 20: lower head; 21: bolt; 22: fifth seal member; 23: ring; 24: bolt; 25: exhaust gas inlet section; 26: hollow fiber; 27: exhaust gas outlet section; 28: purge gas inlet section; 29: purge gas outlet; 30: purge gas flow out section; 31: hollow fiber membrane dehumidifier; 32: leg; 33: body trunk 34: upper tube plate (first tube plate); 34a: through hole; 35: lower tube plate (second tube plate) ; 35a: through hole; 36: partition plate; 36a: through hole; 37: upper trunk (first trunk) ; 38: lower trunk (second trunk) ; 39: exhaust gas inlet chamber; 40: exhaust gas processing chamber; 41: purge gas chamber; 42: exhaust gas outlet chamber; 43: divisional plate; 44: hollow fiber membrane module; 45: first O-ring; 46: divisional plate; 47: hollow fiber; 48: purge gas outlet; 49: purge gas flow out section; 50: lower head (second head) ; 51: second O-ring; 52: divisional plate; 53: purge gas inlet section; 54: upper head (first head) ; 55: purge gas inlet; 56: third O-ring; 57: divisional plate; 58: exhaust gas outlet section; 59: keep plate; 59a: through hole; 60: bolt; 61: seat; 62: guide; 63: exhaust gas inlet section; 64: O-ring groove; 65: O-ring groove; 66, 66a: O-ring groove; 66b: chamfered section; 67: dehumidification container; 68: cylindrical divisional plate.

### BEST MODE FOR CARRYING OUT THE INVENTION

Now, the present invention will be described in greater detail with reference to the accompanying drawings that illustrate preferred embodiments of hollow fiber membrane dehumidifier according to the present invention. Throughout the following description and in the drawings, same or similar parts are denoted by the same reference symbols and will not be described repeatedly.

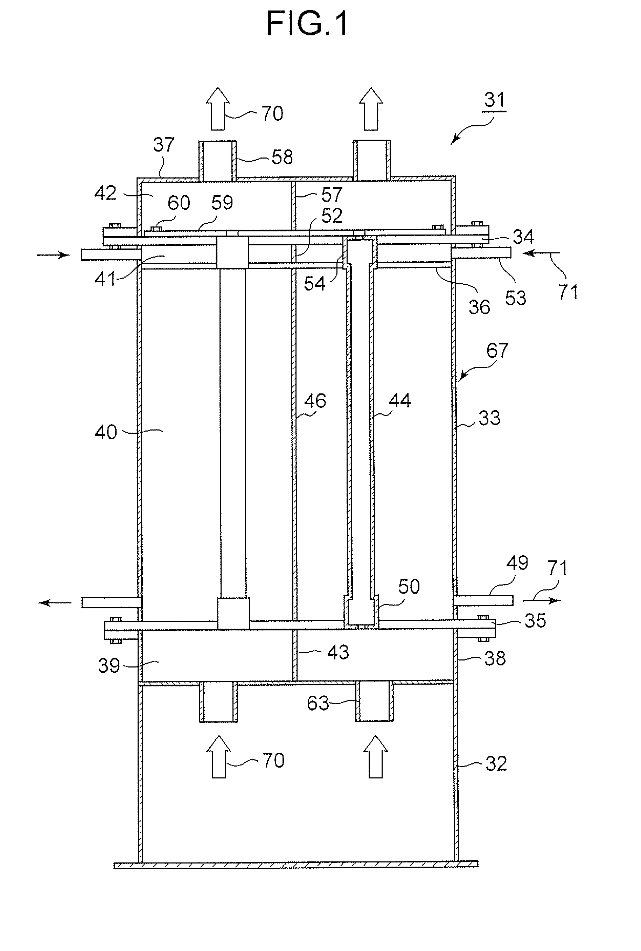

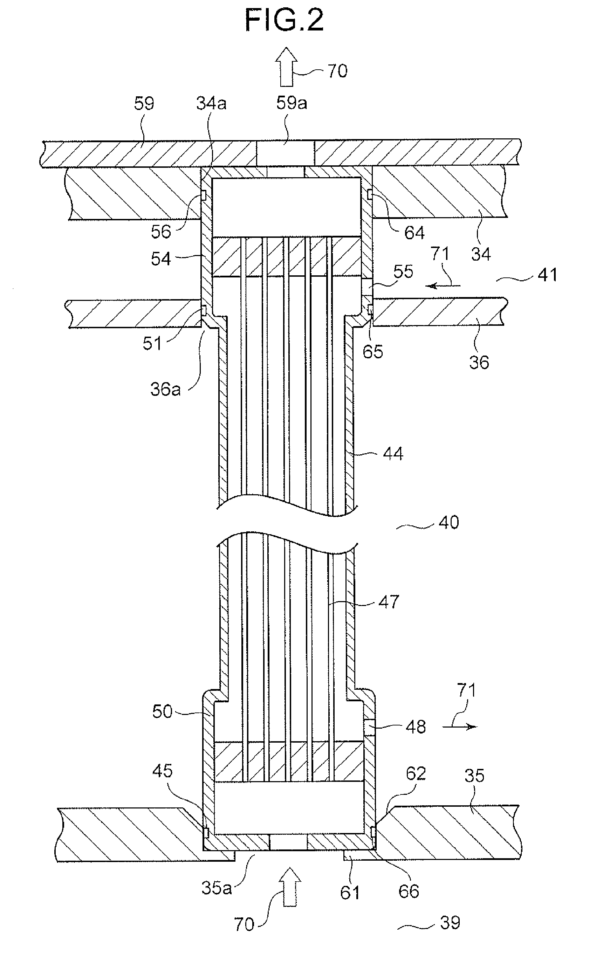

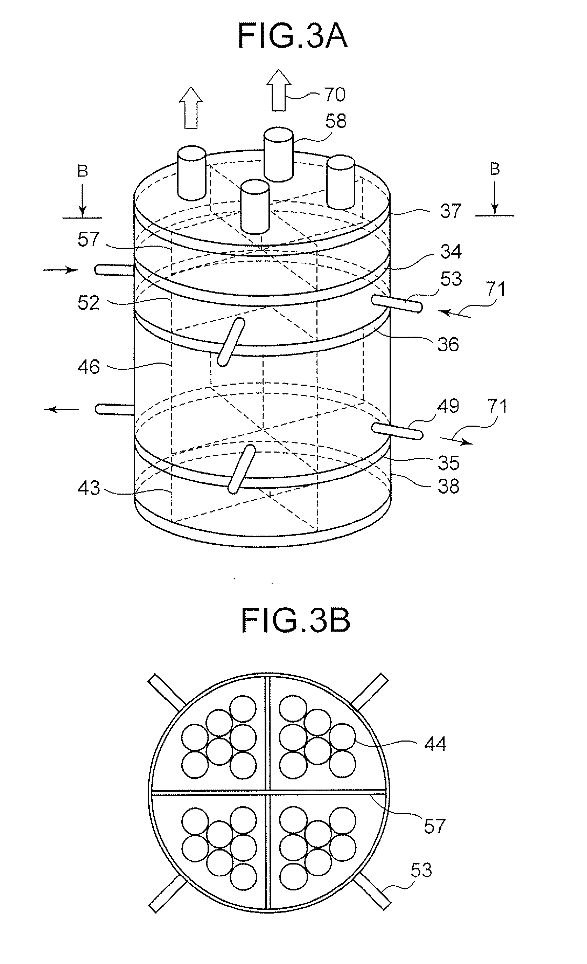

FIG. 1 is a schematic longitudinal cross-sectional view of an embodiment of hollow fiber membrane dehumidifier according to the present invention, showing the structure thereof. FIG. 2 is an enlarged schematic partial view of the hollow fiber membrane dehumidifier of FIG. 1, showing the installation structure of a hollow fiber membrane module thereof. FIGS. 3(a) and 3(b) schematically illustrate the hollow fiber membrane dehumidifier of FIG. 1. FIG. 3(a) is a schematic perspective view of the embodiment and FIG. 3(b) is a schematic cross-sectional view thereof taken along line B-B in FIG. 3(a) as viewed in the direction of the arrows.

Firstly, the basic configuration of a hollow fiber membrane dehumidifier 31 that can be applied to dehumidification of exhaust gas in a nuclear power plant will be described below with reference to F1G. 1.

As shown in FIG. 1, the hollow fiber membrane dehumidifier 31 has as principal component thereof a dehumidification container 67 that is supported by a leg 32.
The dehumidification container 67 includes a cylindrical body trunk 33 and a lower trunk (second trunk) 38 arranged under the body trunk 33 and having exhaust gas inlet sections 63 as annexes. On the body trunk 33, an upper trunk (first trunk) 37 having exhaust gas outlet sections 58 as annexes, is arranged. A lower tube plate (second tube plate) 35 is arranged under the body trunk 33 and an exhaust gas inlet chamber 39 is formed under the lower tube plate 35 and defined by the lower tube plate 35 and the lower trunk 38. An upper tube plate (first tube plate) 34 is arranged on the body trunk 33 and an exhaust gas output chamber 42 is formed on the upper tube plate 34 and defined by the upper tube plate 34 and the upper trunk 37.

A partition plate 36 is arranged on the body trunk 33. As a result of arranging the partition plate 36, the inside of the body trunk 33 is partitioned into an exhaust gas processing chamber 40 that includes a purge gas flow out section 49 and a purge gas chamber 41 that includes a purge gas inlet section 53.

As shown in FIG. 3, the exhaust gas inlet chamber 39 can be partitioned into four rooms, for example, by arranging a cross-shaped divisional plate 43. Each of the rooms in the partitioned exhaust gas inlet chamber 39 is equipped with an exhaust gas inlet section 63 as shown in FIG. 1. Similarly, the exhaust gas outlet chamber 42 can be partitioned into four rooms, for example, by arranging a cross-shaped divisional plate 57. Each of the rooms in the partitioned exhaust gas outlet chamber 42 is equipped with an exhaust gas outlet section 58.

As shown in FIG. 2, an O-ring groove 66 that is a sealing groove is formed on the outer lateral surface of a lower head 50 of each hollow fiber membrane module 44. As a first O-ring 45 is fitted as seal member to the O-ring groove 66 of each hollow fiber membrane module 44, the exhaust gas inlet chamber 39 and an exhaust gas processing chamber 40 are isolated from each other so that exhaust gas (wet gas) and purge gas (dry gas) are separated from each other.

An O-ring groove 65 that is a sealing groove is formed at a lower part of the outer lateral surface of the upper head 54 of each hollow fiber membrane module 44. A second O-ring 51 is fitted as seal member to the O-ring groove 65 of each hollow fiber membrane module 44 to seal the outer lateral surface of the upper head 54 and the inner lateral surface of the through hole 36a of the partition plate 36.

An O-ring groove 64 that is a sealing groove is formed at an upper part of the outer lateral surface of the upper head 54 of each hollow fiber membrane module 44. A third O-ring 56 is fitted as seal member to the O-ring groove 64 of each hollow fiber membrane module 44 to seal the outer lateral surface of the upper head 54 and the inner lateral surface of the through hole 34a of the upper tube plate 34.

Each hollow fiber membrane module 44 can be held to stand vertically as it is put into the through holes 34a, 35a, 36a respectively bored through the upper tube plate 34, the lower tube plate 35 and the partition plate 36 that are arranged concentrically.

Note that, after putting each hollow fiber membrane module 44 into the through holes from above, the hollow fiber membrane module 44 is pressed against the upper tube plate 34 by a keep plate 59. The keep plate 59 is also provided with through holes 59a for allowing exhaust gas from flowing out from the respective hollow fiber membrane modules 44.

As shown in FIG. 3, the exhaust gas processing chamber 40 is partitioned into four rooms, for example, by arranging a cross-shaped divisional plate 46 and a plurality of hollow fiber membrane modules 44 are arranged in each of the rooms.

Part of the exhaust gas that flows in the inside of hollow fibers 47 of the hollow fiber membrane modules 44 from the exhaust gas inlet chamber 39 operates as purge gas. The purge gas enters the hollow fiber membrane modules 44 from the purge gas chamber 41 by way of the purge gas inlets 55 and flows at the outside of the hollow fibers 47. The purge gas that draws and absorbs moisture from the exhaust gas due to the steam partial pressure difference is discharged from the purge gas flow out sections 49 by way of purge gas outlets 48. As described above, lower heads 50 of the hollow fiber membrane modules 44 are arranged in the exhaust gas processing chamber 40 and, in each of the rooms, the purge gas outlet 48 formed at the lower head 50 of each of the hollow fiber membrane modules 44 in the room is arranged in the direction same as the direction or arrangement of the purge gas flow out section 49 of the room.

Additionally, a second O-ring 51 is arranged for each hollow fiber membrane module 44 at the partition plate 36 that partitions the exhaust gas processing chamber 40 and the purge gas chamber 41 in order to isolate purge gas (dry gas) and purge gas that has absorbed moisture from exhaust gas from each other and hold the hollow fiber membrane module 44 in position.

Furthermore, as shown in FIGS. 3(a) and 3(b), the purge gas chamber 41 is partitioned into four rooms by a cross-shaped divisional plate 52 and each of the rooms is provided with a purge gas inlet section 53 for introducing part of the exhaust gas discharged from the exhaust gas outlet chamber 42 as purge gas. The upper head 54 of each hollow fiber membrane module 44 is arranged in the purge gas chamber 41. In each of the room, the purge gas inlet 55 formed at the upper head 54 of each hollow fiber membrane module 44 in the room is arranged in the direction same as the direction or arrangement of the purge gas inlet section 53 of the room

A third O-ring 56 is arranged for each hollow fiber membrane module 44 at the upper tube plate 34 that is separating the purge gas chamber 41 and the exhaust gas outlet chamber 42 in order to isolate exhaust gas and purge gas from each other and hold the hollow fiber membrane module 44. As shown in FIG. 3, the exhaust gas outlet chamber 42 is partitioned into four rooms by a cross-shaped divisional plate 57 and each of the rooms is provided with an exhaust gas outlet section 58,

All the hollow fiber membrane modules 44 arranged in the body trunk 33 are rigidly held in position by the keep plate 59 that presses the upper heads 54 of the hollow fiber membrane modules 44 from above and the bolts 60 that rigidly hold the keep plate 59 in position relative to the upper tube plate 34.

As described above, each of the plurality of hollow fiber membrane modules 44 is put into the corresponding through holes 35a, 36a and 34a formed respectively in the lower tube plate 35, the partition plate 36 and the upper tube plate 34 and held in position by the three O-rings including the first O-ring 45, the second O-ring 51 and the third O-ring 56 arranged at respective positions.

In the embodiment having the above-described configuration, exhaust gas of an OG system (off gas system) can show a maximum flow rate of 80 Nm³/h and a minimum flow rate of 12 Nm³/h and the embodiment is required not to show fluctuations in the dehumidification efficiency under such a variable condition. For this reason, the hollow fiber membrane modules 44 found in all the rooms are operated at the time of a maximum flow rate (80 Nm³/h), whereas the hollow fiber membrane modules 44 found only in one of the rooms in the exhaust gas inlet chamber 39 are operated at the time of a minimum flow rate (12 Nm³/h) as measures for coping with such a variable condition.

Now, the operation of the embodiment will be described below in the case of a maximum flow rate (80 Nm³/h).

The exhaust gas (wet gas) that is introduced into the embodiment by way of the exhaust gas inlet section 63 is divided into four flows of 20 Nm³/h in the exhaust gas inlet chamber 39 that is partitioned into four rooms and the flows of exhaust gas are evenly introduced into the hollow fiber membrane modules 44. Steam contained in exhaust gas is absorbed by the hollow fibers 47 in the hollow fiber membrane modules 44 as exhaust gas flows in the insides of the hollow fibers 47 in the hollow fiber membrane modules 44. The absorbed steam diffuses through the film thickness of the hollow fibers 47 and gets to the surfaces thereof. Part of the exhaust gas that passes through the hollow fiber membrane modules 44 gets to the purge gas chamber 41 through the exhaust gas outlet chamber 42, the exhaust gas outlet sections 58 and the purge gas inlet sections 53.

Since the purge gas chamber 41 is partitioned into four rooms by the partition plate 52 and the purge gas inlet 55 of each hollow fiber membrane modules 44 arranged at the upper head 54 of the hollow fiber membrane module 44 is made to face the direction of the related purge gas inlet section 53, purge gas is evenly introduced into the hollow fiber membrane modules 44.

Steam in exhaust gas is driven to move into purge gas as exhaust gas is dried by the introduced dry purge gas. At this time, exhaust gas (wet gas) and purge gas (dry gas) are prevented from being mixed with each other to secure the dehumidification effect of the embodiment by the first O-rings 45, the second O-rings 51 and the third O-rings 56 arranged respectively at the lower tube plate 35, the partition plate 36 and the upper tube plate 34.

More specifically, each hollow fiber membrane module 44 is put into the upper tube plate 34, the partition plate 36 and the lower tube plate 35 through the corresponding through holes 34a, 36a, 35a respectively bored through them. The gaps between the outer lateral surfaces of the upper head 54 and the lower head 50 of each hollow fiber membrane module 44 and the inner lateral surfaces of the corresponding through holes 34a, 36a, 35a that are respectively bored through the upper tube plate 34, the partition plate 36 and the lower tube plate 35 and arranged coaxially are held constant by the first O-ring 45, the second O-ring 51 and the third O-ring 56 fitted to the upper head 54 and the lower head 50 of the hollow fiber membrane module 44 so as to secure the sealing performance of the embodiment.

Furthermore, a chamfered guide 62 is formed around each of the through holes 35a bored through the lower tube plate 35 to guide the lower head 50 of the corresponding hollow fiber membrane module 44. Additionally, a seat 61 is formed around the through hole 35a to hold the lower head 50. Thus, the lower tube plate 35 is provided with seats 61 respectively for holding the lower heads 50 of the hollow fiber membrane modules 44 and guides 62 that are chamfered by 45 degrees so as to smoothly receive the respective lower heads 50 of the hollow fiber membrane modules 44 and improve the efficiency of the operation of putting the large number of hollow fiber membrane modules 44 into the respective through holes 35a of the lower tube plate 35.

As the guides 62 are formed, each hollow fiber membrane module 44 is concentrically put into the corresponding through holes 34a, 36a and 35a bored through the upper tube plate 34, the partition plate 36 and the lower tube plate 35 respectively so that gaps between the first O-ring 45, the second O-ring. 51 and the third O-ring 56 of each hollow fiber membrane module 44 and the inner walls of the corresponding through holes 34a, 36a, 35a respectively bored through the upper tube plate 34, the partition plate 36 and the lower tube plate 35 can be held constant to secure the sealing performance of the embodiment.

Additionally, each hollow fiber membrane module 44 is provided with grooves 66, 65, 64 respectively for holding the first O-ring 45, the second O-ring 51 and the third O-ring 56. In other words, the first O-ring 45, the second O-ring 51 and the third O-ring 56 are held respectively in the grooves 66, 65, 64. Thus, the hollow fiber membrane module 44 can be put into and pulled out from the through holes without letting any of the first O-ring 45, the second O-ring 51 and the third O-ring 56 fall down, so that the hollow fiber membrane modules 44 can be assembled and handled with an improved efficiency.

Still additionally, the outer diameter of the hollow fiber membrane modules 44 can be minimized by forming O-ring grooves 66, 65, 64 for receiving the first O-ring 45, the second O-ring 51 and the third O-ring 56 at the outer surfaces of the upper head 54 and the lower head 50 of each hollow fiber membrane module 44. Then, as a result, the dimensions of the body trunk 33 can be reduced. Furthermore, the dehumidification performance of the embodiment of hollow fiber membrane dehumidifier according to the present invention can be optimized by making the gap separating any two adjacently located hollow fiber membrane modules 44 equal to or larger than 1.2 times of the diameter of a hollow fiber membrane module 44. The dehumidification performance will be discussed in greater detail hereinafter.

Thus, if compared with comparable conventional hollow fiber membrane dehumidifiers, this embodiment can provide improved assembly and handling for a hollow fiber membrane dehumidifier and reduce about half of the time required for assembly and also the time required for disassembly by forming O-ring grooves 66, 65, 64 on the outer lateral surfaces of the upper head 54 and the lower head 50 of each hollow fiber membrane module 44 and fitting the first O-ring 45, the second O-ring 51 and the third O-ring 56 respectively into the O-ring grooves 66, 65, 64.

Additionally, if compared with comparable conventional hollow fiber membrane dehumidifiers, this embodiment can reduce the size in diameter, the cost and the necessary installation space of the hollow fiber membrane dehumidifier respectively to about 1/2, about 3/5 and about 1/4 of the those of any conventional dehumidifier by forming the O-ring grooves 66, 65, 64 at the outer lateral surfaces of the upper head 54 and the lower head 50 of each hollow fiber membrane module 44.

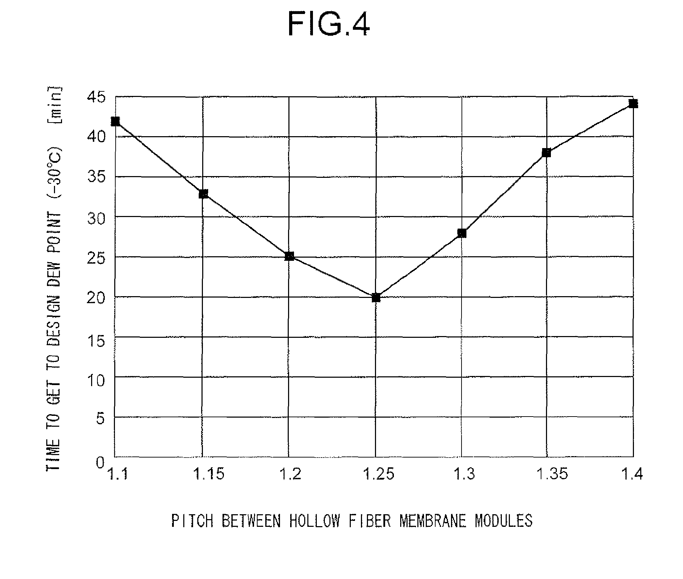

Now, the dehumidification performance of each hollow fiber membrane module 44 will be discussed below with reference to FIG. 4.

FIG. 4 is a characteristic graph illustrating the dehumidification performance of the hollow fiber membrane dehumidifier of FIG. 1.

As pointed out above, the gap separating any two adjacently located hollow fiber membrane modules 44 is made equal to or larger than 1.2 times of the diameter of the upper head 54 of a hollow fiber membrane module 44. The gap separating any two adjacently located hollow fiber membrane modules 44 in the hollow fiber membrane dehumidifier is determined according to the through holes 34a of the upper tube plate 34 and the through holes 36a of the partition plate 36 for receiving hollow fiber membrane modules 44 and needs to be larger than the diameter of the upper head 54 of a hollow fiber membrane module 44. Therefore, practically, the gap separating any two adjacently located hollow fiber membrane modules 44 is preferably about 1.2 times of the diameter of the upper head 54 or larger.

On the other hand, the size of the dehumidification container 67 rises when the gap separating any two adjacently located hollow fiber membrane modules 44 is increased. Additionally, the dehumidification performance of the dehumidifier falls when the gap separating any two adjacently located hollow fiber membrane modules 44 is increased because the number of hollow fiber membrane modules 44 per unit area decreases. As shown in FIG. 4, the time necessary for getting to the design dew point (-30°C) is t = 25 minutes when the pitch of arrangement of hollow fiber membrane modules 44 is p = 1.2 and it is t = 20 minutes and t = 28 minutes respectively when the pitch of arrangement of hollow fiber membrane modules 44 is p = 1.25 and p = 1.3, while the time necessary for getting to the design dew point (-30°C) is t = 38 minutes when the pitch of arrangement of hollow fiber membrane modules 44 is p = 1.35 and it is t = 44 minutes when the pitch of arrangement of hollow fiber membrane modules 44 is p = 1.4. From the above, the time necessary for getting to the design dew point (-30°C) is lowest and t = 20 minutes when the pitch of arrangement of hollow fiber membrane modules 44 is p = 1.25. Thus, it is preferable to make the gap separating any two adjacently located hollow fiber membrane modules 44 between 1.2 times and 1.3 times of the diameter of the upper head 54 of a hollow fiber membrane module 44.

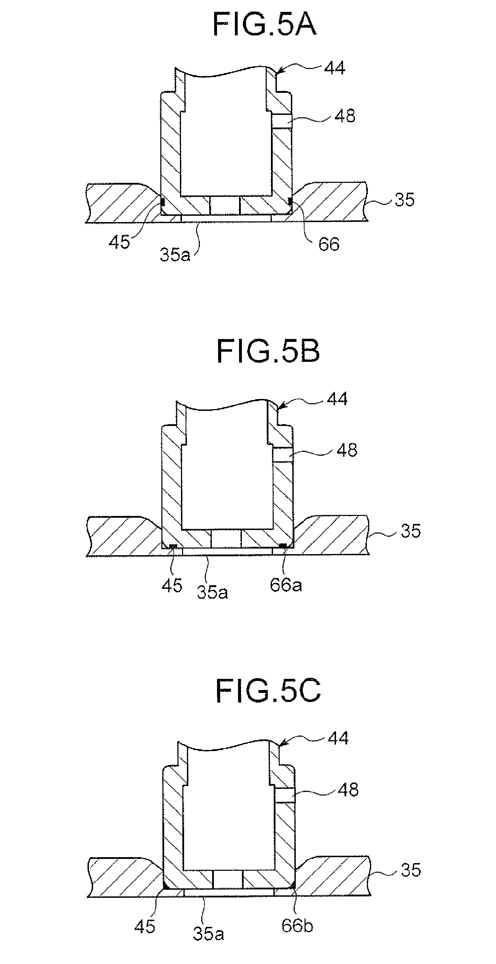

FIGS. 5(a) through 5(c) schematically illustrate the seal section of the lower head 50 of a hollow fiber membrane module according to the present invention. FIG. 5(a) is a cross-sectional view of the first exemplar seal section, FIG. 5(b) is a cross-sectional view of the second exemplar seal section and FIG. 5(c) is a cross-sectional view of the third exemplar seal section.

As pointed out above, an O-ring groove 66 may be formed at the outer lateral surface of the lower head 50 of each hollow fiber membrane module 44 and the first O-ring 45 may be held in the O-ring groove 66 in order to provide improved assembly, handling and sealing of the hollow fiber membrane module 44 as shown in FIG. 5(a). Alternatively, an O-ring groove 66 may be formed at the bottom surface of the lower head 50 of each hollow fiber membrane module 44 and the first O-ring 45 may be held in the O-ring groove 66 as shown in FIG. 5(b). Still alternatively, a chamfered section 66b may be formed at the bottom edge of the lower head 50 of each hollow fiber membrane module 44 and the first O-ring 45 may be held in the chamfered section 66b as shown in FIG. 5(c).

Thus, with this embodiment of hollow fiber membrane dehumidifier, assembly and handling of the hollow fiber membrane modules can be improved and the time required for assembly and also the time required for disassembly can be significantly reduced by forming O-ring grooves or the like 66, 66a, 66b at the outer lateral surface, at the bottom surface or at the edge of the lower head 50 of each hollow fiber membrane module 44 and holding the first O-ring 45 in the O-ring grooves or the like 66, 66a, 66b, whichever appropriate.

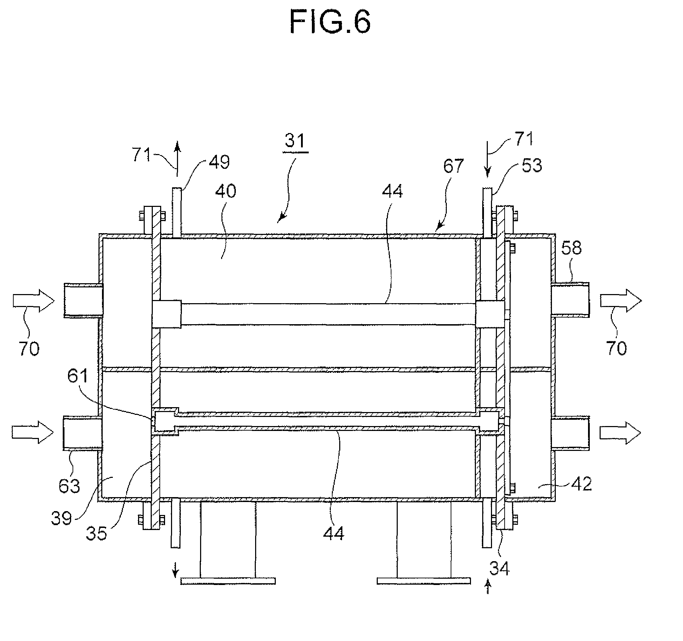

FIG. 6 is a schematic longitudinal cross-sectional view of another embodiment of hollow fiber membrane dehumidifier according to the present invention that is made to lie on the lateral peripheral surface thereof, showing the structure thereof.

As shown in FIG. 6, a seat 61 for supporting the hollow fiber membrane modules 44 may be formed at the lower tube plate 35 to rigidly secure the hollow fiber membrane modules 44 in position and the hollow fiber membrane modules 44 may be arranged horizontally.

With this arrangement, the hollow fiber membrane dehumidifier of this embodiment can reduce the height of the building for containing the hollow fiber membrane dehumidifier because the hollow fiber membrane modules 44 are arranged horizontally.

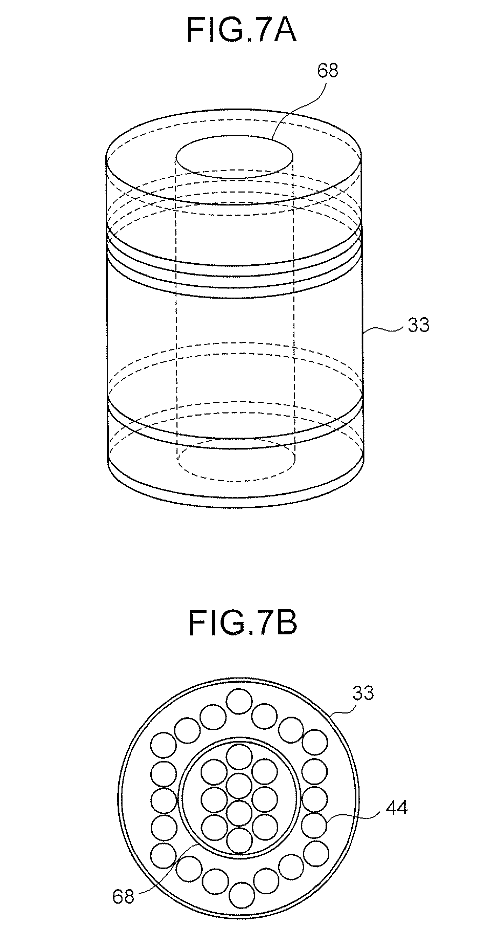

FIGS. 7(a) and 7(b) schematically illustrate still another embodiment of hollow fiber membrane dehumidifier, showing the partitioning structure thereof. FIG. 7(a) is a schematic perspective view of the embodiment and FIG. 7(b) is a schematic plan view thereof.

As pointed out above, the number of operating hollow fiber membrane modules 44 is varied depending on the flow rate in order to improve the dehumidification performance. In the instance of FIG. 3, cross-shaped divisional plates 43, 46, 52, 57 are provided to respectively partition the exhaust gas inlet chamber 39, the exhaust gas outlet chamber 42, the exhaust gas processing chamber 40 and the purge gas chamber 41.

In the instance of FIGS. 7(a) and 7(b), the divisional plates 43, 46, 52, 57 are replaced by a cylindrical divisional plate 68 to partition the exhaust gas processing chamber 40 into a plurality of rooms and each of the rooms is provided with an inlet section and an outlet section (nozzle) according to the objective of operation.

Since the hollow fiber membrane dehumidifier of this embodiment is provided with a cylindrical divisional plate 68, exhaust gas and purge gas flow efficiently to improve the dehumidification effect.

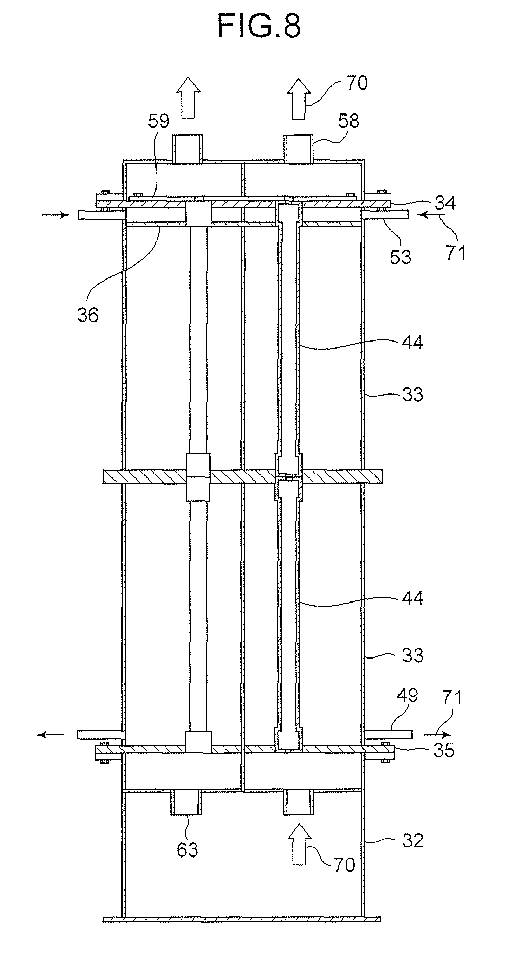

FIG. 8 is a schematic longitudinal cross-sectional view of still another embodiment of hollow fiber membrane dehumidifier according to the present invention and having a structure formed by vertically arranging upper hollow fiber membrane modules on respective lower hollow fiber membrane modules to produce two stories, showing the structure thereof.

Any attempt to increase the diameter of the dehumidification container 67 faces a limit as shown in FIG. 1 because the number of hollow fiber membrane modules 44 that can be contained in the container is increased due to the raise of the flow rate of exhaust gas and that of purge gas. Therefore, the embodiment of FIG. 8 has a structure where hollow fiber membrane modules 44 are vertically arranged in a plurality of stories, or two stories in the illustrated instance.

Thus, the hollow fiber membrane dehumidifier of this embodiment can reduce the outer diameter of the dehumidification container 67 containing the hollow fiber membrane dehumidifier and downsize the hollow fiber membrane dehumidifier by vertically arranging hollow fiber membrane modules 44 in a plurality of stories.

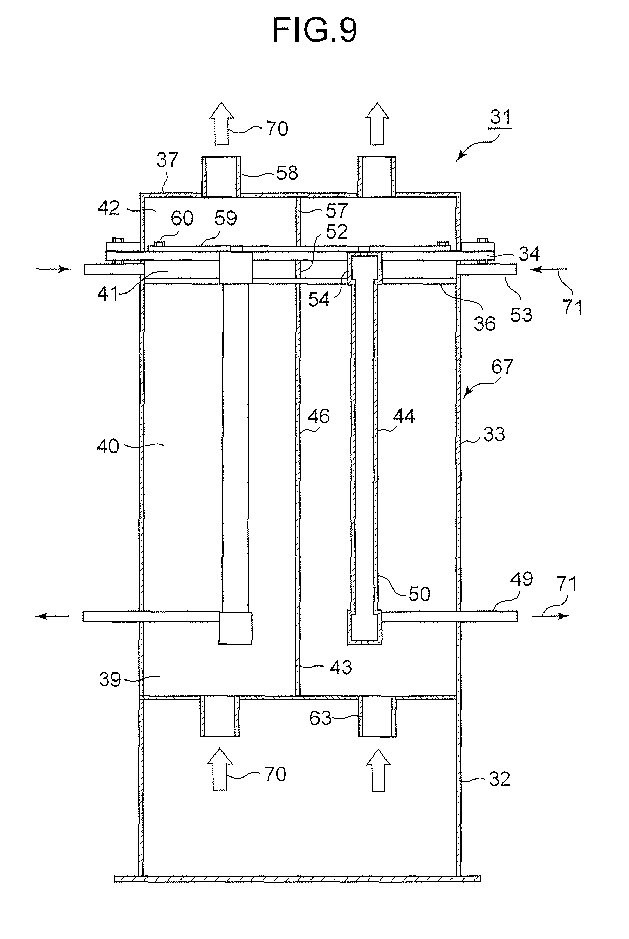

FIG. 9 is a schematic longitudinal cross-sectional view of still another embodiment of hollow fiber membrane dehumidifier according to the present invention, showing the structure thereof. No lower tube plate 35 that each of the embodiments illustrated in FIGS. 1 through 3 has is found in this embodiment while the body trunk 33 and the lower trunk 38 are integrally formed in this embodiment. The integrated component will be referred to as lower trunk 38 here. The purge gas outlet 48 of each hollow fiber membrane module 44 (see FIG. 2) is directly connected to the corresponding purge gas flow out section 49 that communicates with the outside of the lower trunk 38 in this embodiment.

In this embodiment, exhaust gas flows into the lower trunk 38 from the exhaust gas inlet section 63 and rises up through the inside of the hollow fibers 47 in each of the hollow fiber membrane modules 44 before it flows out of the hollow fiber membrane dehumidifier 31 by way of the exhaust gas outlet chamber 42 and the exhaust gas outlet sections 58.

On the other hand, purge gas flows into the purge gas chamber 41 in the lower trunk 38 from the purge gas inlet sections 53 and flows down by way of the outside of the hollow fibers 47 in each of the hollow fiber membrane modules 44 before it flows out of the hollow fiber membrane dehumidifier 31 by way of the purge gas flow out sections 49 located near the lower ends of the hollow fiber membrane modules 44.

The present invention is described above by way of embodiments. However, the present invention is by no means limited to the above-described embodiments, which may be combined and codified in various different ways in terms of configuration without departing from the scope of the present invention.

## Claims

1. A hollow fiber membrane dehumidifier (31) **characterized by** comprising:
a dehumidification container (67) including a first trunk (37) provided with exhaust gas outlet sections (58) and a second trunk (38) provided with exhaust gas inlet sections (63);
a first tube plate (34) for forming an exhaust gas outlet chamber (42) at a side of the first trunk (37);
a partition plate (36) arranged in the dehumidification container (67) to partition inside of the dehumidification container (67) into an exhaust gas processing chamber (40) including purge gas flow out sections (49) and a purge gas chamber (41) including purge gas inlet sections (53);
a plurality of hollow fiber membrane modules (44) respectively put into through holes (34a) formed in the first tube plate (34) and through holes (36a) formed in the partition plate (36);
seal members (56, 51) held in respective seal grooves (64, 65) arranged in first heads (54) of the hollow fiber membrane modules (44) at the side of the first trunk (37) to seal gaps between the first heads (54) and the first tube plate (34) and gaps between the first heads (54) and the partition plate (36); and
a keep plate (59) for pressing the hollow fiber membrane modules (44) against the first tube plate (34) from a side of end of the first trunk (37).

2. The hollow fiber membrane dehumidifier (31) according to claim 1, **characterized by** further comprising a second tube plate (35) arranged at the side of the end of the second trunk (38) for forming an exhaust gas inlet chamber (39).

3. The hollow fiber membrane dehumidifier (31) according to claim 2, **characterized by** further comprising a body trunk (33) arranged between the first trunk (37) and the second trunk (38), the second trunk (38) being sandwiched between the body trunk (33) and the second trunk (38).

4. The hollow fiber membrane dehumidifier (31) according to claims 2 or 3, **characterized in that** the second tube plate (35) has seats (61) respectively arranged around the through holes (35a) thereof for supporting second heads (50) of the hollow fiber membrane modules (44).

5. The hollow fiber membrane dehumidifier (31) according to any one of claims 2 through 4, **characterized by** further comprising divisional plates (57, 43) for dividing the exhaust gas inlet chamber (39) and the exhaust gas outlet chamber (42) into at least two rooms each, each room including an exhaust gas inlet section (63) or an exhaust gas outlet section (58).

6. The hollow fiber membrane dehumidifier (31) according to any of claims 1 through 5, **characterized by** further comprising divisional plates (46, 52) for dividing the exhaust gas processing chamber (40) and the purge gas chamber (41) into at least two rooms each, each room including a purge gas flow out section (49) or a purge gas inlet section (53).

7. The hollow fiber membrane dehumidifier (31) according to any one of claims 1 through 6, **characterized in that** the purge gas flow out sections (49) and the purge gas inlet sections (53) are arranged in a same direction.

8. The hollow fiber membrane dehumidifier (31) according to any one of claims 1 through 7, **characterized in that** the first trunk (37) is arranged above the second trunk (38).

9. The hollow fiber membrane dehumidifier (31) according to any one of claims 1 through 8, **characterized in that** the first trunk (37) is arranged horizontally relative to the second trunk (38).
